# EUROPEAN PATENT SPECIFICATION

(11) **EP 3 996 919 B1**
(45) Date of publication and mention of the grant of the patent: **02.12.2026**
(21) Application number: 20737013.1
(22) Date of filing: 06.07.2020
(51) Int. Cl.: B32B 27/40, C08G 18/08, C08G 18/42, C08G 18/73, C08G 18/75, C08G 18/77, C08G 18/79, C08G 18/83, C09J 175/04

(54) **ONE-COMPONENT HEAT-ACTIVATABLE POLYURETHANE WATER-BASED ADHESIVE COMPOSITION**
EINKOMPONENTIGE, WÄRMEAKTIVIERBARE WASSERBASIERTE POLYURETHANKLEBSTOFFZUSAMMENSETZUNG
COMPOSITION ADHÉSIVE MONOCOMPOSANTE À BASE D'EAU ET DE POLYURÉTHANE ACTIVABLE À LA CHALEUR

(30) Priority: 11.07.2019 EP 19185812
(43) Date of publication of application: 18.05.2022
(73) Proprietor: Bostik SA, 92800 Puteaux (FR)
(72) Inventor: LI, Yong, Shanghai 201108 (CN); YU, Liwei, Shanghai 201108 (CN)
(74) Representative: Arkema Patent
(86) International application number: PCT/EP2020/069038
(87) International publication number: WO 2021/005018

(56) References cited:
- US-A1- 2007 098 884
- US-A1- 2013 158 159
- US-A1- 2017 369 735

## Description

The present invention relates to a one-component heat-activatable polyurethane water-based adhesive composition, suitable for use as a thermoforming lamination adhesive.

Thermoforming or vacuum forming is essentially taking a piece of thermoplastic sheet (or foil), heating it to a point beyond its softening point, vacuuming it to a 3 dimensionally contoured surface of a substrate made of some thermoplastic material, and cooling the formed sheet back down to below its softening point.

A large variety of thermoplastic materials can be subjected to this treatment. Some of the common materials used in thermoforming are listed as follows:
- High Impact Polystyrene (HIPS)
- Acrylonitrile-Butadiene-styrene (ABS)
- Styrene-Acrylonitrile (SAN)
- Polyvinyl Chloride (PVC)
- Polycarbonate (PC)
- High Density Polyethylene (HDPE)
- Polyphenylene Oxide (PPO).

This forming technique is in particular used to laminate decorative expandable thermoplastic cover materials (such as PVC foils) onto 3 dimensionally contoured thermoplastic or fiberboard substrates, by using a special class of adhesives called thermoforming lamination adhesives.

Typically, a thermoforming lamination adhesive is first applied to the 3 dimensionally contoured surface of the substrate by spray, then heated in order to form a dried adhesive layer on said surface. This dried adhesive layer is then heated in view of its thermal activation, and the thermoplastic foil is, during a thermoforming operation, joined under pressure onto said surface, resulting in the build-up of a high strength bond that joins said surface and the foil.

This process has been widely used for producing interior trim equipment for the automotive industry. Some typical applications include thermoforming lamination of PVC films in the manufacture of, for instance, car roofs, door panels, instruments panels and central consoles, dashboards, sun visors or steering wheels.

Heat-activatable (also sometimes, rather improperly, designated as "heat-activated") polyurethane solvent-based adhesive compositions are known for use as thermoforming lamination adhesives.

For ecological reasons, there has been for many years a trend to the replacement of such solvent-based adhesive compositions by heat-activatable polyurethane water-based adhesive dispersions, which also require, when implemented, a drying step, followed by a heat activation step of the dried adhesive film.

At present, many automotive suppliers mainly use, for manufacturing the car interior trim equipment such as mentioned above, a two-component (also designated as "2K") aqueous adhesive which comprises a heat-activatable water-based polyurethane dispersion and a water-dispersed isocyanate curing agent, the latter being also called "hardener".

These two components are mixed on the car supplier site, before being applied on the substrates to be bonded.

The bond, which has been formed from the joining of the thermoplastic foil onto the 3 dimensionally contoured surface of the substrate coated with the adhesive, results from a curing (or cross-linking) reaction between the polyurethane and the hardener. This cross-linking reaction takes some time to develop, until a fully cured adhesive joint is obtained.

A high final strength, corresponding to a fully cured adhesive joint, has to be obtained after a short period of time of a few days, so that the corresponding car trim equipment can be dispatched as soon as possible to the car manufacturer, reducing therefore the need for storing said article on the industrial site of the car supplier site in order to complete curing. In particular, the obtention of a very high final strength after one-day storage of the car equipment at room temperature is quite desirable.

Apart from the final strength, the initial strength of the bond joining the thermoplastic foil together with the 3 dimensionally contoured surface of the substrate is also quite an important requirement.

This initial strength (also designated sometimes by the terms "green strength") is the ability of the adhesive to hold the two surfaces together when first contacted, and before the adhesive develops it ultimate bonding properties when fully cured.

Indeed high green strength adhesives tend to prevent wrinkling and slippage of the vinyl foil, during the lamination process. They also ensure that the film is quickly and firmly fixed on the 3 dimensionally contoured and sometimes geometrically complex surface of the substrate. This in turn allows the resulting assembly to be handled as a single equipment on the assembly line during the automated manufacturing process, ensuring a high productivity therefor.

However, the mixing step for 2K aqueous adhesives requires additional process and equipment, which implies more costs.

Further, once the two components have been mixed, the resulting single composition may encounter stability problems until, depending upon production constraints, it can be effectively implemented. These problems can limit seriously the pot life of said composition, which has to be kept in a storage tank, to a few hours not generally exceeding 8 hours, and even less during the summer high temperatures. The single composition which has not been used during the pot life has to be discarded.

As automatic adhesive application systems by spraying become more and more implemented on the car suppliers industrial sites, there is also the problem that an unstable single composition resulting from the mixing of the two components may block the adhesive supply system and pipes, especially in summer.

At last, as the hardener is isocyanate based, there is also the problem that it may cause allergy issues for the workers of the industrial site.

Some one-component (also designated as "1K") heat activatable polyurethane water based adhesive compositions are known, which avoid the drawbacks of the 2K compositions.

The Chinese patent application CN 106675492 mentions such a 1K water-based composition, which comprises as essential ingredients polyurethane dispersions, an Ethylene Vinyl Acetate (or EVA) dispersion, and a water-based blocked polyisocyanate crosslinking agent. However, this document does not point out any results for the adhesive strength of the corresponding bonded substrates.

One aim of the present invention is to provide a one-component heat-activatable polyurethane water-based adhesive composition, which allows joining two substrates with an improved adhesive strength.

Another aim of the present invention is to provide a one-component heat-activatable polyurethane water-based adhesive composition which, when used as a thermoforming lamination adhesive, provides high green strength (or initial strength) together with an improved final strength.

It has now been found that the above aims can be achieved in all or in part by means of the one-component heat-activatable polyurethane water-based adhesive composition, which is the subject matter of the present invention.

According to a first object, the present invention relates to a one-component heat-activatable polyurethane water-based adhesive composition, which comprises, with respect to the total weight of the adhesive composition:
- from 12 % to 50 %, by weight of dry matter, of an aqueous dispersion of a polyurethane (A) comprising alkoxysilyl pending and/or terminal groups, and
- from 0.5 % to 5 % by weight of a glycidoxy substituted alkoxysilane compound (B) with a glycidoxy functionality of at least 2.

Such polyurethane (A) also include, in particular, poly(urethane-urea).

Said water-based dispersions of polyurethane (A) are known, in particular from PCT application WO 2018/120055 of WANHUA and can be prepared as described in said application.

US2013/158159 discloses epoxy-containing polysiloxane oligomer compositions with a glycidoxy functionality of at least 2, and uses in coatings, sealants, adhesives, and composites containing the same.

US2017/369735 discloses a coating composition comprising: 20 to 70 wt % of waterborne silane modified polyurethane; 0.5 to 5 wt % of a hardener; 0.5 to 5 wt % of a blackening inhibitor; 0.5 to 5 wt % of a corrosion inhibitor; and 0.5 to 5 wt % of a lubricant, with the balance being a solvent. The hardener may be a glycidoxy substituted alkoxysilane compound with a glycidoxy functionality of 1.

According to a preferred embodiment, the water-based dispersion of polyurethane (A) is an aqueous anionic aliphatic polyurethane aqueous dispersion.

According to another preferred embodiment, the alkoxy radical comprised in the alkoxysilyl pending and/or terminal groups of polyurethane (A) is selected among methoxy or ethoxy radicals.

Such dispersions are also available commercially. One may cite, as an example, ADWEL^{®} 1530, which is available from WANHUA as a dispersion containing 50 % of solid particles of said polyurethane.

These dispersions are sometimes designated as self-cross linkable polyurethane dispersions, because they are likely, once applied on a substrate, dried and then activated by heating, to undergo a cross-linking reaction and cure, without the need for a hardener.

It is believed, without being bound by any theoretical mechanism, that in the drying and heat-activating steps of implementation as a thermoforming lamination adhesive, the alkoxysilyl pending and/or terminal groups of polymer (A) undergo a rapidly hydrolysis, resulting in the cross-linking of the corresponding polyurethane main chains.

Surprisingly, it was discovered that the combination, in the composition according to the invention, of said polymer (A) with the specific silane compound (B), results in an improved final strength for the bonded substrates, while also providing appropriate initial strength. Indeed, the composition according to the invention makes it possible to achieve, when implemented as a thermoforming lamination adhesive, an initial strength (measured by a peel test carried out 1 minute after laminating a PVC foil on an ABS substrate) which is advantageously greater than 15 N/25 mm. It also makes it possible to achieve a final strength (measured by a peel test carried out after storing at room temperature the same laminate during 1 day after lamination) which is, advantageously, greater than 50 N/25 mm, and, even more preferably, greater than 85 N/25 mm.

In addition, the 1K composition according to the invention does not present the pot life problems of a 2K composition, and advantageously possesses a shelf life of at least 6 months.

The specific silane compound (B), is a glycidoxy substituted silane compound (B) with a glycidoxy functionality of at least two.

The glycidoxy group has for formula : 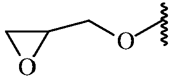 and silanes substituted by such groups are well known to one skilled in the art. They are available commercially on the market.

According to a preferred embodiment, silane compound (B) has a glycidoxy functionality of at least 3, and even more preferably of at least 4.

Among such commercially available silanes, one may cite CoatOSil^{®} MP 200, which is available from MOMENTIVE and is an alkoxysilane oligomer having four 2-glycidoxyethyl groups.

According to another preferred embodiment, the water-based adhesive composition according to the invention also comprises, with respect to the total weight of said adhesive composition, from 8 to 30 %, by weight of dry matter, of an aqueous emulsion of a copolymer (C) of vinyl acetate and ethylene (VAE). VAE aqueous emulsions are based on the copolymerization of vinyl acetate and ethylene, in which the vinyl acetate content can range between 60 and 95 weight percent, and the ethylene content ranges between 5 and 40 weight percent, based on the total weight of the monomers.

According to a more preferred embodiment, the VAE (C) copolymer to be comprised as an aqueous emulsion in the composition according to the invention is such that :
- the Brookfield viscosity of a 55% weight/weight in dry matter aqueous dispersion of (C) is greater than 1000 mPa.s at 25°C ; and /or
- its glass transition temperature (Tg) is less than 10°C.

In a standard manner, well known to a person skilled in the art, the glass transition temperature can be measured by DSC (Differential Scanning Calorimetry).

According to an even more preferred embodiment, the VAE (C) to be comprised as an aqueous emulsion in the composition according to the invention is such that :
- the Brookfield viscosity of a 55% weight/weight in dry matter aqueous dispersion of (C) is greater than 4000 mPa.s at 25°C, preferably comprised between 4500 and 12000 mPa.s; and/or
- its glass transition temperature (Tg) is greater than 0°C, preferably comprised between 0°C and 10°C.

The final strength of the bond joining two substrates is then particularly improved.

VAE emulsions are widely available on the market. Mention may be made as an example of :
- DA 104 from DAIREN CHEMICAL, which is 55% weight/weight aqueous dispersion of VAE with a viscosity of 2000 - 3000 mPa.s at 25°C according to ISO 2555:2018 and a Tg comprised between -20°C and -10°C.
- VINNAPAS^{®} 645 from WACKER, which is 55% weight/weight aqueous dispersion of VAE with a viscosity of 5000-10000 mPa.s. at 25°C according to ISO 2555:2018 and a Tg equal to 5°C.

According to another embodiment, the water-based adhesive composition according to the invention may comprise up to 15 % by weight of dry matter, of an aqueous dispersion of a non silylated polyurethane (D), preferably a non silylated anionic polyurethane dispersion, said percentage being expressed with respect to the total weight of the adhesive composition.

Aqueous dispersions of non silylated polyurethane which are suitable as a thermoforming lamination adhesive are well known in the art, and are for instance, described in patent application US 2005/0131109 of BAYER. Many commercial products are available on the market. One may cite, as an example, DISPERCOLL^{®} U XP 2682 from COVESTRO which is a 50 % weight/weight aqueous dispersion of an anionic polyurethane based on a polyester polyol and aliphatic polyisocyanates.

According to an even more preferred embodiment, the water-based adhesive composition according to the invention may comprise between 3 and 13 % by weight of dry matter of the aqueous dispersion of (D), corresponding to an even more improved final strength value.

The composition according to the invention may optionally comprise minor amounts of ingredients selected among one or more pH adjusters, biocides, dyes or pigments, thickeners, wetting agents, defoamers. By minor amounts, a content of such ingredients between 0.01 % to 0.5 % weight is intended, said percentage being expressed with respect to the total weight of the adhesive composition.

As a pH adjuster, mention may be made of a base selected among triethanolamine, trimethylamine or diethanolamine, such as AMP-95 from DOW. One may cite PREVENTOL^{®} D7 from LANXESS as a biocide.

In some applications, it may be particularly advantageous to visualize the adhesive, once applied on the 3 dimensionally contoured surface of the substrate, especially to determine whether the thermoforming adhesive has been evenly applied. For these applications, pigments or dyes can be incorporated into the water-based composition according to the invention. A wide variety of compatible pigments are available commercially for such a use. As an example, a water-dispersed phthalocyanine blue pigment such as Blue C6 from CHROMAFLO may be cited.

A thickener may be added to the adhesive composition according to the invention, in order to increase its viscosity to a desired level, when, for instance, said adhesive is to be applied on a sloped or vertical surface of the substrate to be laminated with a decorative expandable vinyl cover foil, in order to reduce its tendency to run-off. Useful thickeners can include acrylate thickener or polyurethane based thickener, such as DEURHEO^{®} WT-180F from ELEMENTICS.

As wetting agent, use may be made of non ionic, anionic or cationic surfactants compatible with the ingredients of the water-based composition according to the invention. An anionic compound such as HYDROPALAT^{®} WE 3475 from BASF may be cited, as an example of such wetting agent.

At last, useful defoamers include organo-modified siloxanes, such as ANTIFOAM 691 from RHODIA.

In the adhesive composition according to the invention, water is contributed by the aqueous emulsion of polyurethane (A), by the aqueous emulsion of VAE copolymer (C), the aqueous dispersion of the non silylated polyurethane (D), by water present in optional ingredients and by an optional addition of water. In fact, depending on the dilution of the various ingredients, water may be added in order to obtain the desired concentration of active material.

According to an embodiment, the water represents from 20% to 60% by weight of the total weight of the adhesive composition, preferably from 30% to 50% by weight of the total weight of the adhesive composition.

According to a particularly preferred embodiment, the adhesive composition according to the invention comprises :
- from 12 % to 40 %, by weight of dry matter, of the aqueous dispersion of polyurethane (A) ;
- from 0.5 % to 2 % by weight of the glycidoxy substituted alkoxysilane compound (B) with a glycidoxy functionality of at least 2 ;
- from 9 to 28 %, by weight of dry matter, of the aqueous emulsion of VAE copolymer (C) ; and
- between 3 and 13 % by weight of dry matter of the aqueous dispersion of non silylated polyurethane (D).

According to a second object, the present invention relates to a process of manufacturing the heat-activatable polyurethane water-based adhesive composition, such as defined above, said process comprising the steps of :
(i) introducing the aqueous emulsion of the VAE copolymer (C), when present, in a mixing vessel under stirring ; then
(ii) introducing the aqueous dispersion of the polyurethane (A), in said vessel under constant stirring maintained during for instance about 30 to 60 minutes ; then
(iii) introducing silane compound (B) in said vessel, still under stirring, maintained for instance during about 30 minutes ;

Preferably, in step (i), the introduction of copolymer (C) is followed, before step (ii), by the introduction of a pH adjuster (when present in the adhesive composition), maintaining stirring (carried out for instance at a rotational speed of about 300-500 revolutions/minutes) during a period of time of about 30 minutes.

According to another preferred embodiment, between steps (ii) and (iii), the biocide, wetting agent and/or defoamer (when present), are introduced in said mixing vessel, under constant stirring, maintained during for instance about 30 to 60 minutes.

According to a further preferred embodiment, step (iii) is followed optionally by introducing in said vessel the thickener and/or pigment (or dye) (when present), under constant stirring, maintained during for instance about 30 to 60 minutes.

The steps of the process described above are preferably implemented at room temperature, and the composition obtained following said process, is advantageously submitted to a 80-mesh sieve filtration.

According to a third object, the present invention relates to a method of joining a substrate and a decorative expandable thermoplastic cover material, by thermoforming lamination, said method comprising the steps of :
(a) applying the heat-activatable polyurethane water-based adhesive composition (such as defined above) on the surface of said substrate ;
(b) drying the applied composition to remove the water ; then
(c) applying the expandable thermoplastic cover material on the substrate surface coated with the dried adhesive composition, by a thermoforming lamination process.

Being water-based, the composition according to the invention is compatible with a variety of substrates, including wood, particle boards, chipboards and most thermoplastic materials. Preferably the substrate is a non expandable, rigid, substrate.

Among expandable thermoplastic cover materials, a PVC foil is preferred.

The adhesive composition can be applied on the surface of said substrate by any desired means, such as brushing, dipping, roll coating, or, preferably, by spraying. The amount of said adhesive composition to be applied may vary in the range from 50 to 200 g/m², expressed in wet amount, depending on applications and substrates.

Once applied as in step (a), the water-based adhesive composition is then submitted to a drying step (b), in which the water can be removed either at room temperature or at elevated temperature. The drying temperature is chosen based on the properties of the adhesive composition ; drying at lower temperatures requires longer periods of time.

The expandable thermoplastic cover material, preferably a PVC foil, is applied in step (c) by using standard thermoforming lamination techniques, which involve pressing the thermoplastic cover material and the substrate under pressure and heating.

The following examples are given purely by way of illustration of the invention and should not, under any circumstances, be interpreted as limiting the scope thereof.

### Examples 1-5 (according to the invention)

The water-based adhesive compositions of examples 1-5 in Table 1 were prepared by simple mixing of their ingredients under stirring, as pointed out above in the detailed description of the process according to the invention.

Each of these adhesive compositions was implemented in the preparation of laminates through thermoforming lamination, as follows.

Use was made, as the substrate, of a square ABS plaque of 10 cm side and 3 mm thickness and, as the thermoplastic cover, of a PVC foil of 22 cm length, 2.5 cm width and 1.5 mm thickness.

Each of the compositions were sprayed on the ABS rigid substrate at a controlled coating weight comprised in the range from 100 to 120 g/m² (expressed as wet amount). Then, the coated ABS substrate was placed in an oven at 50°C for 10 minutes, for drying. The PVC foil was then heat-pressed onto the dried coated ABS substrate, at a temperature of 70°C for both the upper and lower panels of the laboratory press, and at a nominal pressure of 2 MPa which was maintained for 10 seconds.

Laminates thus prepared were submitted to a 180° peel test on an Instron tensile strength tester, with the jaw speed set at 300 mm/min. This test was carried out after allowing the laminates to stand at room temperature after their preparation : 1 minute (to assess initial strength) or 1 day (to assess final strength).

The results obtained have been expressed in N/25 mm and gathered in Table 1.

All examples show a 180° peel result after 1 minute which is greater than 15 N/25 mm, which is considered as quite appropriate.

Further, the 180° peel result after 1 day is, for all examples, greater than 50 N/25 mm, which corresponds to a very good final strength.

In addition, for the examples 3, 4 and 5, the final strength is even more improved, being greater than 85 N/25 mm. For these 3 examples, a substrate failure of the PVC skin (noted SF in Table 1) is also observed, which means that said PVC skin is, during the peeling operation, torn on a percentage of its surface which is assessed and also pointed out in Table 1 just before the SF letters. Such a failure mode for the corresponding laminate contrasts with the adhesive failure mode observed for examples 1 and 2 and points towards an excellent degree of structural integrity for the adhesive joint of the laminate.

### Examples A-C (comparative)

Examples 1-5 are reproduced, with the detailed compositions shown in Table 1, replacing, as the silane compound (B) CoatOSil^{®} MP 200 by Silquest^{®} Wetlink 78 which is available from MOMENTIVE and which is a mono-functional 3-glycidoxypropyl alkoxysilane.

The peel test results are also shown in Table 1.

The peel values after 1 day are less than 50 N/25 mm, which is considered as quite inappropriate.

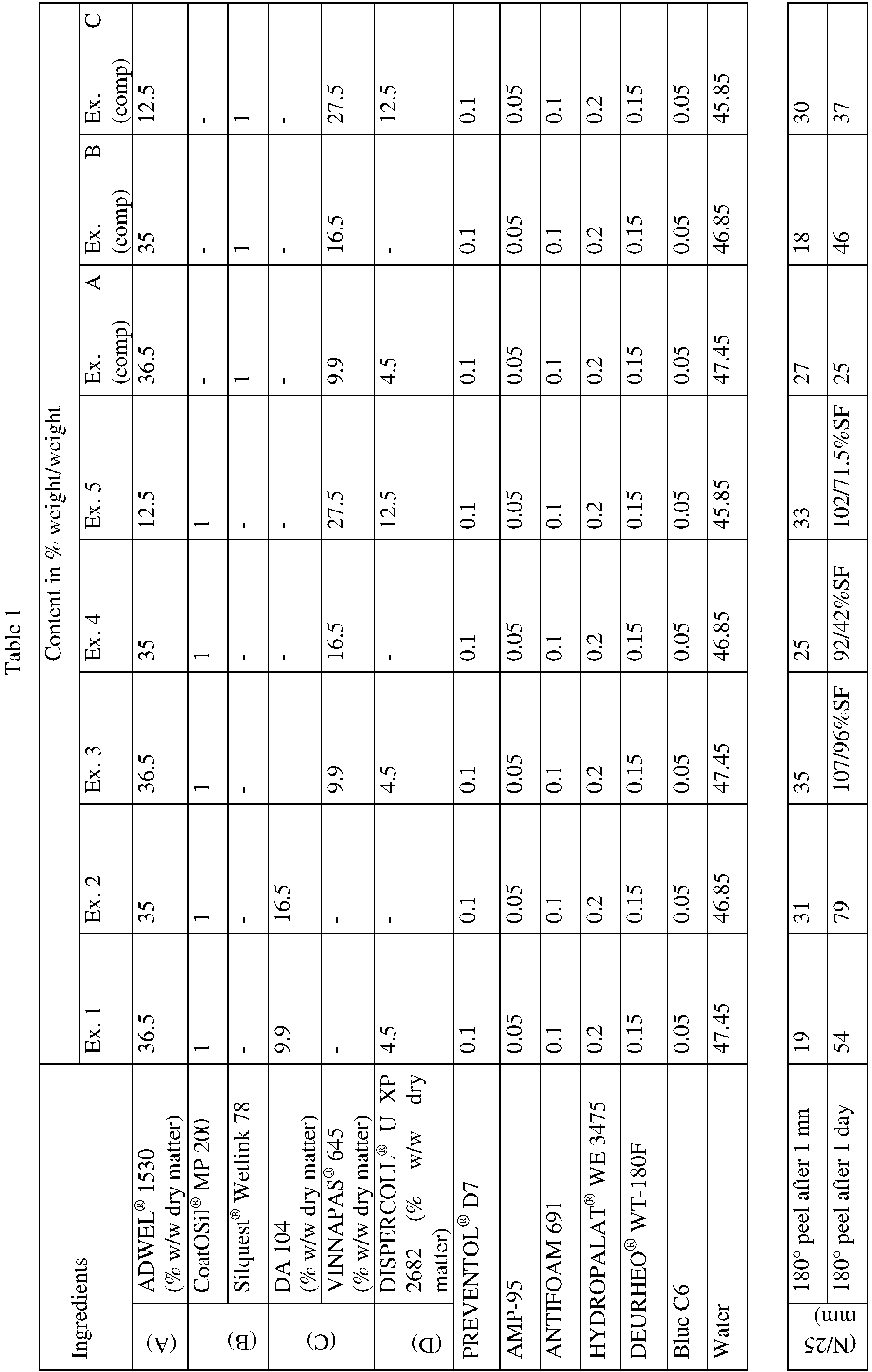

## Claims

1. One-component heat-activatable polyurethane water-based adhesive composition, which comprises, with respect to the total weight of the adhesive composition:
- from 12 % to 50 %, by weight of dry matter, of an aqueous dispersion of a polyurethane (A) comprising alkoxysilyl pending and/or terminal groups, and
- from 0.5 % to 5 % by weight of a glycidoxy substituted alkoxysilane compound (B) with a glycidoxy functionality of at least 2.

2. One-component adhesive composition according to claim 1, **characterized in that** the water-based dispersion of polyurethane (A) is an aqueous anionic aliphatic polyurethane aqueous dispersion.

3. One-component adhesive composition according to either one of claims 1 and 2, **characterized in that** the alkoxy radical comprised in the alkoxysilyl pending and/or terminal groups of polyurethane (A) is selected among methoxy or ethoxy radicals.

4. One-component adhesive composition according to any one of claims 1 to 3, **characterized in that** the silane compound (B) has a glycidoxy functionality of at least 3.

5. One-component adhesive composition according to any one of claims 1 to 4, **characterized in that** it also comprises, with respect to the total weight of said adhesive composition, from 8 to 30 %, by weight of dry matter, of an aqueous emulsion of a copolymer (C) of vinyl acetate and ethylene (VAE).

6. One-component adhesive composition according to claim 5, **characterized in that** the VAE (C) is such that :
- the Brookfield viscosity of a 55% weight/weight in dry matter aqueous dispersion of (C) is greater than 4000 mPa.s at 25°C ; and/or
- its glass transition temperature (Tg) is greater than 0°C, the glass transition temperature being measured by Differential Scanning Calorimetry.

7. One-component adhesive composition according to any one of claims 1 to 6, **characterized in that** comprise up to 15 % by weight of dry matter, of an aqueous dispersion of a non silylated polyurethane (D).

8. One-component adhesive composition according to any one of claims 1 to 7, **characterized in that** water represents from 20% to 60% by weight of the total weight of the adhesive composition.

9. One-component adhesive composition according to any one of claims 5 to 8, **characterized in that** it comprises :
- from 12 % to 40 %, by weight of dry matter, of the aqueous dispersion of polyurethane (A) ;
- from 0.5 % to 2 % by weight of compound (B) ;
- from 9 to 28 %, by weight of dry matter, of the aqueous emulsion of VAE copolymer (C) ; and
- between 3 and 13 % by weight of dry matter of the aqueous dispersion of non silylated polyurethane (D).

10. Process of manufacturing the heat-activatable polyurethane water-based adhesive composition, as defined in any one of claims 1 to 9, said process comprising the steps of
(i) introducing the aqueous emulsion of the VAE copolymer (C), when present, in a mixing vessel under stirring ; then
(ii) introducing the aqueous dispersion of the polyurethane (A), in said vessel under constant stirring ; then
(iii) introducing silane compound (B) in said vessel, still under stirring.

11. Method of joining a substrate and a decorative expandable thermoplastic cover material, by thermoforming lamination, said method comprising the steps of :
(a) applying the heat-activatable polyurethane water-based adhesive composition, as defined in any one of claims 1 to 9, on the surface of said substrate ;
(b) drying the applied composition to remove water ; then
(c) applying the expandable thermoplastic cover material on the substrate surface coated with the dried adhesive composition, by a thermoforming lamination process.

12. Method according to claim 11, **characterized in that** the expandable thermoplastic cover material is a PVC foil.

## Patentansprüche

1. Einkomponentige hitzeaktivierbare wasserbasierte Polyurethanklebstoffzusammensetzung, die, bezogen auf das Gesamtgewicht der Klebstoffzusammensetzung, Folgendes umfasst:
- 12 Gew.-% bis 50 Gew.-% Trockenmasse einer wässrigen Dispersion eines Polyurethans (A) mit Alkoxysilyl-Seitengruppen und/oder -Endgruppen und
- 0,5 bis 5 Gew.-% einer glycidoxysubstituierten Alkoxysilanverbindung (B) mit einer Glycidoxyfunktionalität von mindestens 2.

2. Einkomponentige Klebstoffzusammensetzung nach Anspruch 1, **dadurch gekennzeichnet, dass** es sich bei der wasserbasierten Dispersion von Polyurethan (A) um eine wässrige Dispersion eines anionischen aliphatischen Polyurethans handelt.

3. Einkomponentige Klebstoffzusammensetzung nach einem der Ansprüche 1 und 2, **dadurch gekennzeichnet, dass** der in den Alkoxysilyl-Seitengruppen und/oder -Endgruppen von Polyurethan (A) enthaltene Alkoxyrest aus Methoxy- oder Ethoxyresten ausgewählt ist.

4. Einkomponentige Klebstoffzusammensetzung nach einem der Ansprüche 1 bis 3, **dadurch gekennzeichnet, dass** die Silanverbindung (B) eine Glycidoxyfunktionalität von mindestens 3 aufweist.

5. Einkomponentige Klebstoffzusammensetzung nach einem der Ansprüche 1 bis 4, **dadurch gekennzeichnet, dass** sie außerdem, bezogen auf das Gesamtgewicht der Klebstoffzusammensetzung, 8 bis 30 Gew.-% Trockenmasse einer wässrigen Emulsion eines Copolymers (C) von Vinylacetat und Ethylen (VAE) umfasst.

6. Einkomponentige Klebstoffzusammensetzung nach Anspruch 5, **dadurch gekennzeichnet, dass** das VAE (C) so beschaffen ist, dass:
- die Brookfield-Viskosität einer 55 gew.-%igen wässrigen Dispersion von (C) bei 25 °C größer als 4000 mPa.s ist; und/oder
- seine Glasübergangstemperatur (Tg) größer als 0 °C ist, wobei die Glasübergangstemperatur durch dynamische Differenzkalorimetrie gemessen wird.

7. Einkomponentige Klebstoffzusammensetzung nach einem der Ansprüche 1 bis 6, **dadurch gekennzeichnet, dass** sie bis zu 15 Gew.-% Trockenmasse einer wässrigen Dispersion eines nicht silylierten Polyurethans (D) umfasst.

8. Einkomponentige Klebstoffzusammensetzung nach einem der Ansprüche 1 bis 7, **dadurch gekennzeichnet, dass** Wasser 20 % bis 60 % Gew.-% des Gesamtgewichts der Klebstoffzusammensetzung ausmacht.

9. Einkomponentige Klebstoffzusammensetzung nach einem der Ansprüche 5 bis 8, **dadurch gekennzeichnet, dass** sie Folgendes umfasst:
- 12 Gew.-% bis 40 Gew.-% Trockenmasse der wässrigen Dispersion von Polyurethan (A);
- 0,5 bis 2 Gew.-% Verbindung (B);
- 9 bis 28 Gew.-% Trockenmasse der wässrigen Emulsion des VAE-Copolymers (C) ; und
- zwischen 3 und 13 Gew.-% Trockenmasse der wässrigen Dispersion von nicht silyliertem Polyurethan (D).

10. Verfahren zur Herstellung der hitzeaktivierbaren wasserbasierten Polyurethanklebstoffzusammensetzung gemäß einem der Ansprüche 1 bis 9, wobei das Verfahren die folgenden Schritte umfasst:
(i) Eintragen der wässrigen Emulsion des VAE-Copolymers (C), sofern vorhanden, in ein Mischgefäß unter Rühren; dann
(ii) Eintragen der wässrigen Dispersion des Polyurethans (A) wird in das Gefäß unter ständigem Rühren; dann
(iii) Eintragen der Silanverbindung (B) in das Gefäß, immer noch unter Rühren.

11. Verfahren zum Verbinden eines Substrats und eines dekorativen expandierbaren thermoplastischen Deckmaterials durch Thermoformlaminierung, wobei das Verfahren die folgenden Schritte umfasst:
(a) Aufbringen der hitzeaktivierbaren wässrigen Polyurethanklebstoffzusammensetzung gemäß einem der Ansprüche 1 bis 9 auf die Oberfläche des Substrats;
(b) Trocknen der aufgebrachten Zusammensetzung zur Entfernung von Wasser; dann
(c) Aufbringen des expandierbaren thermoplastischen Deckmaterials auf die mit der getrockneten Klebstoffzusammensetzung beschichtete Substratoberfläche durch ein Thermoformlaminierverfahren.

12. Verfahren nach Anspruch 11, **dadurch gekennzeichnet, dass** es sich bei dem expandierbaren thermoplastischen Deckmaterial um eine PVC-Folie handelt.

## Revendications

1. Composition d'adhésif à base d'eau et de polyuréthane activable thermiquement monocomposante qui comprend par rapport au poids total de la composition d'adhésif :
- de 12 à 50 %, en poids de matière sèche, d'une dispersion aqueuse d'un polyuréthane (A) comportant des groupes pendants et/ou terminaux alcoxysilyle, et
- de 0,5 % à 5 % en poids d'un composé alcoxysilane substitué par glycidoxy (B) ayant une fonctionnalité de glycidoxy d'au moins 2.

2. Composition d'adhésif monocomposante selon la revendication 1, **caractérisée en ce que** la dispersion à base d'eau et de polyuréthane (A) est une dispersion aqueuse de polyuréthane aliphatique anionique aqueux.

3. Composition d'adhésif monocomposante selon l'une quelconque des revendications 1 et 2, **caractérisée en ce que** le radical alcoxy compris dans les groupes alcoxysilyle pendants et/ou terminaux du polyuréthane (A) est choisi parmi des radicaux méthoxy ou éthoxy.

4. Composition d'adhésif monocomposante selon l'une quelconque des revendications 1 à 3, **caractérisée en ce que** le composé silane (B) possède une fonctionnalité de glycidoxy d'au moins 3.

5. Composition d'adhésif monocomposante selon l'une quelconque des revendications 1 à 4, **caractérisée en ce qu'**elle comprend en outre, par rapport au poids total de ladite composition d'adhésif, de 8 à 30 %, en poids de matière sèche, d'une émulsion aqueuse d'un copolymère (C) d'acétate de vinyle et d'éthylène (VAE).

6. Composition d'adhésif monocomposante selon la revendication 5, **caractérisée en ce que** le VAE (C) est tel que :
- la viscosité Brookfield d'une dispersion aqueuse de (C) à 55 % poids/poids en matière sèche est supérieure à 4 000 mPa.s à 25 °C ; et/ou
- sa température de transition vitreuse (Tg) est supérieure à 0 °C, la température de transition vitreuse étant mesurée par calorimétrie différentielle à balayage.

7. Composition d'adhésif monocomposante selon l'une quelconque des revendications 1 à 6, **caractérisée en ce qu'**elle contient jusqu'à 15 % en poids de matière sèche d'une dispersion aqueuse d'un polyuréthane non silylé (D).

8. Composition d'adhésif monocomposante selon l'une quelconque des revendications 1 à 7, **caractérisée en ce que** l'eau représente de 20 % à 60 % en poids du poids total de la composition d'adhésif.

9. Composition d'adhésif monocomposante selon l'une quelconque des revendications 5 à 8, **caractérisée en ce qu'**elle comprend :
- de 12 % à 40 %, en poids de matière sèche, de la dispersion aqueuse de polyuréthane (A) ;
de 0,5 % à 2 % en poids de composé (B) ;
- de 9 à 28 %, en poids de matière sèche, de l'émulsion aqueuse de copolymère de VAE (C) ; et
- entre 3 et 13 % en poids de matière sèche de la dispersion aqueuse de polyuréthane non silylé (D).

10. Procédé de fabrication de la composition d'adhésif à base d'eau et de polyuréthane activable thermiquement, telle que définie à l'une quelconque des revendications 1 à 9, ledit procédé comprenant les étapes de
(i) introduction de l'émulsion aqueuse du copolymère de VAE (C), lorsqu'il est présent, dans une cuve de mélange sous agitation ; puis
(ii) introduction de la dispersion aqueuse du polyuréthane (A), dans ladite cuve sous agitation constante ; puis
(iii) introduction du composé silane (B) dans ladite cuve, toujours sous agitation.

11. Procédé d'assemblage d'un substrat et d'un matériau de couverture thermoplastique expansible décoratif, par stratification par thermoformage, ledit procédé comprenant les étapes de :
(a) application de la composition d'adhésif à base d'eau et de polyuréthane activable thermiquement, telle que définie dans l'une quelconque des revendications 1 à 9, sur la surface dudit substrat ;
(b) séchage de la composition appliquée pour éliminer l'eau ; puis
(c) application du matériau de couverture thermoplastique expansible sur la surface du substrat revêtue par la composition d'adhésif séchée, par un processus de stratification par thermoformage.

12. Procédé selon la revendication 11, **caractérisé en ce que** le matériau de couverture thermoplastique expansible est un film de PVC.
